# DEMANDE DE BREVET EUROPEEN

(11) **EP 4 040 204 A1**
(43) Date de publication de la demande: **10.08.2022**
(21) Numéro de dépôt: 22154317.6
(22) Date de dépôt: 31.01.2022
(51) Int. Cl.: G02B 6/44, G02B 6/48

(54) **INSTALLATION DE CÂBLE OPTIQUE AÉRIEN À EFFET DE PISTONNAGE RÉDUIT**

(30) Priorité: 05.02.2021 FR 2101150
(71) Demandeur: Nexans, 92400 Courbevoie (FR)
(72) Inventeur: ALESSI, Luigi, 59600 Maubeuge (FR); HOUYAUX, Alain, 59600 Elesmes (FR); FIEVEZ, Alain, 7801 Irchonwelz (BE); ZANIN, Benoît, 59149 Bousignies sur Roc (FR)
(74) Mandataire: Ipsilon

(57) **Abrégé**

L'invention concerne une installation de câble optique comprenant au moins un boîtier de raccordement optique (20) et au moins un câble optique (28) raccordé audit au moins un boîtier de raccordement optique, ledit au moins câble optique (28) comprenant :
- un porteur central de renforcement mécanique (32),
- au moins un module de fibres optiques (34) disposé autour du porteur central de renforcement mécanique (32),
- au moins un fil de maintien (38) guipé autour dudit au moins un module de fibres optiques (34) pour maintenir ledit au moins un module de fibres optiques (34) contre le porteur central de renforcement mécanique (32), et
dans lequel le porteur central de renforcement mécanique (32) est fixé audit au moins un boîtier de raccordement optique (20) pour limiter un déplacement longitudinal dudit au moins un module de fibres optiques (34) à l'intérieur le long d'une gaine de protection (40).

## Description

La présente invention concerne le raccordement des câbles optiques comprenant une pluralité de fibres optiques.

En particulier, la présente invention concerne une installation de câble optique comprenant un boîtier de raccordement optique et au moins un câble optique raccordé au boîtier de raccordement optique.

Un réseau de télécommunication optique connecte différents sous-ensembles entre eux pour permettre un échange de données entre ces sous-ensembles. Un tel réseau de télécommunication optique est constitué de branches, formées par des câbles optiques, et de nœuds raccordant les différentes branches entre elles pour réaliser un maillage d'un territoire donné.

Une partie de ce réseau de télécommunication optique située à proximité des bâtiments et maisons individuelles est terrestre, notamment aérien. Les câbles optiques sont raccordés entre eux au niveau de boîtiers de raccordement optique, appelés boîtiers de protection d'épissures. Ces boîtiers de raccordement optique ont pour objectif de protéger et de recevoir les épissures des fibres optiques contenues dans les câbles optiques. En d'autres termes, les fibres optiques sont connectées entre elles à l'intérieur du boîtier de raccordement optique de manière à desservir une portion de réseau, un immeuble ou une maison individuelle.

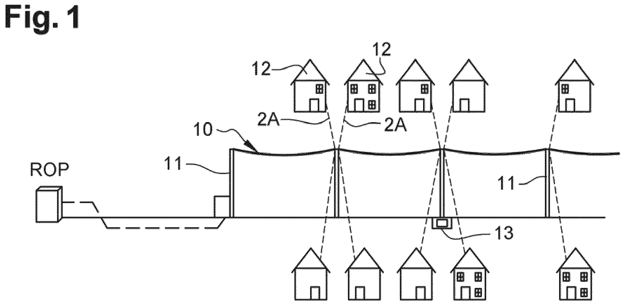

La figure 1 est une vue schématique illustrant une partie d'un réseau de télécommunication optique entre une armoire de distribution ROP et des habitations 12. Un câble optique aérien 10 est supporté par des pylônes 11 et raccordé aux habitations 12. Pour ce faire, des boîtiers de raccordements sont disposés sur les pylônes 11 au niveau des points de jonction de fibres optiques individuelles 2A. Les fibres optiques du câble optique aérien 10 sont raccordées au moyen d'épissures aux fibres optiques individuelles 2A à l'intérieur des boîtiers de raccordement.

Les câbles optiques aériens comprennent une pluralité de modules de fibres optiques disposés autour d'un porteur central. Chaque module de fibres optiques comprend un tube et une pluralité de fibres optiques s'étendant à l'intérieur de ce tube. Un fil de maintien est généralement guipé autour des modules de fibres optiques pour les solidariser avec le porteur central. Une gaine de protection entoure l'ensemble formé par le porteur central, les modules de fibres optiques et le fil de maintien.

Le câble optique aérien est soumis à des conditions climatiques rudes pouvant entrainer de forte variation de dimensions du câble optique, notamment de longueur. Lorsque la température extérieure est élevée, le câble optique s'allonge tandis que l'hiver, lorsque que la température extérieure est faible, le câble optique se rétracte et diminue de longueur. Une telle variation de longueur du câble survient également lorsqu'il subit des contraintes liées au vent et à la surcharge de neige ou de givre.

En raison de la structure du câble et des matériaux en présence, la variation de longueur subie par le noyau formé par le porteur central, les modules de fibres optiques et le fil de maintien est différente de celle subie par la gaine de protection. Un déplacement relatif intervient donc entre le noyau du câble optique et la gaine de protection lors d'une telle variation de longueur. Ce phénomène est appelé « pistonnage » (connu également en anglais sous l'expression « pistoning effect »). Ce phénomène de pistonnage est d'autant plus important que le câble optique est soumis à une température très basse, à des charges de givres ou de neige importantes, notamment en hiver et à des températures élevées, à des vents forts, notamment en été. Cet effet est également amplifié lorsque le câble est de grande longueur (e.g. au-delà de 200m).

Ce déplacement relatif se traduit par une tendance du noyau du câble optique à sortir de la gaine de protection lorsque la température du câble optique baisse. A contrario, le noyau du câble optique se rétracte à l'intérieur de la gaine de protection lorsque la température du câble optique et/ou les contraintes (vent/ givre) augmentent. Cette rétractation a donc tendance à solliciter davantage les fibres optiques ce qui peut entrainer une baisse de la qualité du signal transmis voir une coupure de ce signal par les fibres optiques à l'intérieur de ce noyau.

Les solutions pour limiter les effets du pistonnage dépendent de la composition du câble optique, notamment des tubes entourant les fibres optiques. Ces tubes peuvent être des tubes rigides et durs (appelés généralement « loose tubes » en anglais) ou des tubes souples et mous (appelés généralement « micro-bundle » en anglais).

Les tubes rigides ou « loose tubes » ont généralement une épaisseur supérieure à 0,2mm et ont pour objectif de former une barrière rigide de protection des fibres optiques. Ces tubes rigides ne peuvent par exemple pas être déchirés à main nues par un opérateur. Un outil est ainsi nécessaire pour dénuder un tel tube.

Les caractéristiques mécaniques de ces tubes rigides autorisent l'application d'un effort de guipage permettant de réduire de manière très importante le phénomène de pistonnage. En d'autres termes, un effort de guipage maintenant les tubes contre le porteur central peut être appliqué sans dégrader les fibres optiques à l'intérieur de ces tubes.

Les tubes souples ou « micro-bundles » forment une peau très fine autour des fibres optiques, généralement inférieure ou égale à 0,2mm. Ainsi, les tubes souples peuvent être déchirés manuellement de sorte qu'ils facilitent grandement la manipulation du câble optique lors d'une opération de connexion. Toutefois, la souplesse de ces tubes ne permet pas d'appliquer un effort de guipage identique à celui des tubes rigides, évitant le phénomène de pistonnage.

Pour éviter le pistonnage dans des câbles optiques comprenant des tubes souples, les solutions connues dépendent de la longueur du câble optique considéré, notamment pour les câbles optiques ayant une longueur inférieure ou supérieure à 200m.

Lorsque le câble a une longueur inférieure à 200m, les extrémités des fibres de renfort, par exemple en aramide, entourant le noyau du câble optique sont retroussées et fixées à la gaine de protection à l'aide d'un collier. En d'autres termes, un opérateur enlève une portion de gaine de protection au niveau d'une extrémité de celui-ci pour faire apparaître les fibres de renfort. Ces fibres de renfort sont pliées, rabattues contre la gaine de protection et fixée à celle-ci. L'efficacité de cette technique est toutefois discutée et n'a pas montré de résultats probants, en particulier lorsque les variations de températures, et /ou les contraintes sur le câble sont importantes.

Lorsque le câble a une longueur supérieure ou égale à 200m, des boucles de lovage sont réalisées sur le câble optique au niveau du pylône sur lequel est installé le boitier de raccordement. Ainsi, une longueur de câble optique supplémentaire est nécessaire et utilisée pour augmenter la friction à l'intérieur du câble et donc limiter les déplacements relatifs à l'intérieur de celui-ci. Bien qu'efficace, cette solution entraine des coûts très importants lorsqu'elle est appliquée à chaque point de raccordement du réseau.

Il existe donc un besoin pour une solution pratique et moins onéreuse permettant de limiter, voire de supprimer, l'effet de pistonnage dans un câble optique comprenant des tubes souples ou « micro-bundles ».

Pour cela, l'invention propose une installation de câble optique comprenant un boîtier de raccordement optique et au moins un câble optique raccordé au boîtier de raccordement optique, ledit au moins câble optique comprenant :
- un porteur central de renforcement mécanique,
- au moins un module de fibres optiques disposé autour du porteur central de renforcement mécanique, ledit au moins un module de fibres optiques comprenant un micro-tube et une pluralité de fibres optiques s'étendant à l'intérieur du micro-tube,
- au moins un fil de maintien guipé autour dudit au moins un module de fibres optiques pour maintenir ledit au moins un module de fibres optiques contre le porteur central de renforcement mécanique, et
- une gaine de protection disposée autour dudit au moins un fil de maintien, dans lequel le porteur central de renforcement mécanique est fixé au boîtier de raccordement optique pour limiter un déplacement longitudinal dudit au moins un module de fibres optiques à l'intérieur le long de la gaine de protection.

La fixation du porteur central de renforcement mécanique au boîtier de raccordement optique permet de former un point d'appui fixe au noyau du câble optique, i.e. le porteur central de renforcement mécanique, ledit au moins un module de fibres optiques et ledit au moins un fil de maintien. Ce point d'appui fixe combiné à l'effort de guipage dudit au moins un fil de maintien sur ledit au moins un module de fibres optiques permet de limiter le pistonnage à l'intérieur du câble optique.

Lorsque les micro-tubes sont trop souples pour être soumis à un effort de guipage supprimant le pistonnage, le point d'appui fixe créé par le porteur central de renforcement mécanique fixé au boîtier de raccordement optique permet de limiter de manière importante le pistonnage malgré un effort de guipage réduit. Cet effort de guipage réduit est de préférence choisi de manière à ne pas endommagé les fibres optiques présentes à l'intérieur du micro-tube.

Il est ainsi possible de s'affranchir des solutions connues que sont le retroussage puis le serrage des fils de renfort contre la gaine de protection ainsi que le lovage du câble optique sur un point fixe, comme un pylône, en amont du boîtier de raccordement optique. L'opération de raccordement est ainsi facilitée et rendue beaucoup moins onéreuse.

Selon des modes particuliers de réalisation :
- le micro-tube dudit au moins un module de fibres optiques présente une épaisseur inférieure ou égale à 0,2mm,
- le micro-tube dudit au moins un module de fibres optiques présente un allongement à la rupture inférieur ou égal à 300%, de préférence inférieur à 200%, de manière encore préférée entre 80% et 200%,
- le micro-tube dudit au moins un module de fibres optiques présente une charge à la rupture inférieure ou égale à 20MPa, de préférence inférieure ou égale à 15MPa,
- le micro-tube dudit au moins un module de fibres optiques est réalisé dans un matériau comprenant des halogènes ou un matériau à faible taux d'halogène, et/ou dans un matériau à faible émission de fumées, et/ou un matériau non propagateur de flamme,
- ledit au moins un câble optique comprend une pluralité de modules de fibres optiques enroulés autour du porteur central de renforcement mécanique selon un pas d'enroulement prédéterminé, ledit au moins un fil de maintien étant guipé autour de la pluralité de modules de fibres optiques pour maintenir ladite pluralité de modules de fibres optiques contre le porteur central de renforcement mécanique,
- ledit au moins un fil de maintien est guipé autour dudit au moins un module de fibres optiques avec un effort de guipage inférieur ou égal à 3 N,
- le boîtier de raccordement optique forme un logement de réception dudit au moins un câble optique et comprend un moyen de fixation du porteur central de renforcement mécanique au niveau dudit logement de réception,
- le boîtier de raccordement optique est un boîtier de protection d'épissures comprenant au moins une cassette de support d'épissures configurée pour recevoir une épissure d'au moins une fibre optique dudit au moins un module de fibres optiques.

L'invention concerne également un procédé de raccordement d'un câble optique à un boîtier de raccordement optique, comprenant les étapes suivantes :
- fournir une installation de câble optique telle que mentionnée ci-avant,
- retirer une portion de la gaine de protection et une portion dudit au moins un fil de maintien de manière à dégager ledit au moins un module de fibres optiques et le porteur central de renforcement mécanique,
- fixer le porteur central de renforcement mécanique au boîtier de renforcement mécanique pour limiter un déplacement longitudinal dudit au moins un module de fibres optiques le long de la gaine de protection,
- engager au moins une fibre optique dudit au moins un module de fibres optiques dans le boîtier de raccordement optique de manière à pouvoir la connecter à une autre fibre optique.

### Brève description des dessins

Les dessins annexés illustrent l'invention :
[Fig. 1] représente un schéma d'un réseau de télécommunication optique.
[Fig. 2] représente une vue de face d'un boîtier de raccordement optique d'une installation de câble optique appartenant à un réseau de télécommunication optique tel qu'illustré en figure 1.
[Fig. 3] représente une vue en coupe transversale d'un câble optique d'une installation de raccordement de câble optique.
[Fig. 4] représente une vue en perspective d'un câble optique tel qu'illustré en figure 3 partiellement dénudé de manière à observer les différentes couches composant ce câble optique.
[Fig. 5] représente une vue de face détaillé du boîtier de raccordement optique tel qu'illustré en figure 2 avec un câble optique engagé au travers de l'une de ses ouvertures, le câble optique étant dénudé sur une partie de sa longueur avec des modules de fibres optiques retroussées et un porteur central fixé au boîtier de raccordement optique.

### Description de mode(s) de réalisation

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

Il est proposé une installation de câble optique, de préférence aérien. On entend par « aérien », le fait que le câble est destiné à être disposé au contact de l'air libre, i.e. en surface. De préférence, le câble aérien est destiné à être fixé à un pylône ou entre deux pylônes. Ainsi, le câble optique aérien n'est pas destiné à être mise en place sous terre. Le câble aérien est donc soumis aux conditions extérieures, notamment de température.

Cette installation de câble optique peut faire partie d'un réseau de télécommunication optique tel qu'illustré en figure 1.

L'installation de câble optique comprend au moins un câble optique et au moins un boîtier de raccordement optique. Ce boîtier de raccordement optique est un boîtier de protection d'épissures. Il a pour objectif de protéger et de recevoir les épissures des fibres optiques contenues dans les câbles optiques. En d'autres termes, les fibres optiques sont connectées entre elles à l'intérieur du boîtier de raccordement optique de manière à desservir une portion de réseau, un immeuble ou une maison individuelle. Ainsi, le boîtier de raccordement optique loge des fibres optiques entrantes et des fibres optiques sortantes connectées entre elle à l'intérieur du boîtier de raccordement optique.

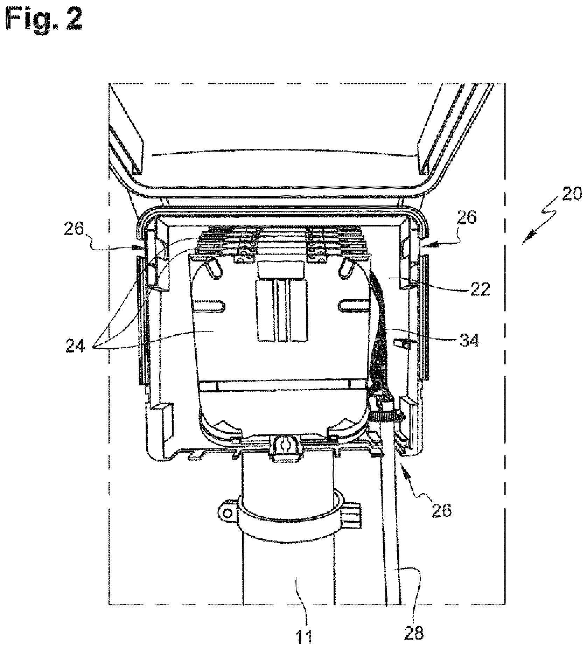

Un tel boîtier de raccordement optique est visible en figure 2. Le boîtier de raccordement optique 20 comprend un caisson 22 et une pluralité de cassettes de support d'épissures 24 disposées à l'intérieur du caisson 22.

Le caisson 22 forme une enveloppe externe du boîtier de raccordement optique 20 permettant de protéger les éléments disposés en son sein de l'environnement extérieur, notamment du vent et de la pluie. Le caisson 22 forme une pluralité d'ouvertures 26 permettant l'introduction de câbles optiques 28 à l'intérieur du caisson 22. Ces ouvertures 26 constituent des logements de réception de câbles optiques 28. En particulier, ces ouvertures 26 sont des découpes réalisées dans une paroi du caisson 22 de manière à former un passage entre la cavité interne du caisson 22 et l'extérieur du caisson 22.

Sur l'exemple de la figure 2, un câble optique 28 est disposé au travers d'une ouverture 26 située en partie basse du caisson 22. Le câble optique 28 a été dénudé sur une partie de sa longueur pour libérer une portion de longueur de modules de fibres optiques 34 de manière à pouvoir connecter les fibres optiques 30 à l'intérieur de ceux-ci. Ces fibres optiques 30 sont connectées à l'intérieur des cassettes de support d'épissures 24. Ces cassettes de support d'épissures 24 sont configurées pour recevoir une épissure d'au moins une fibre optique 30 d'un module de fibres optiques 34.

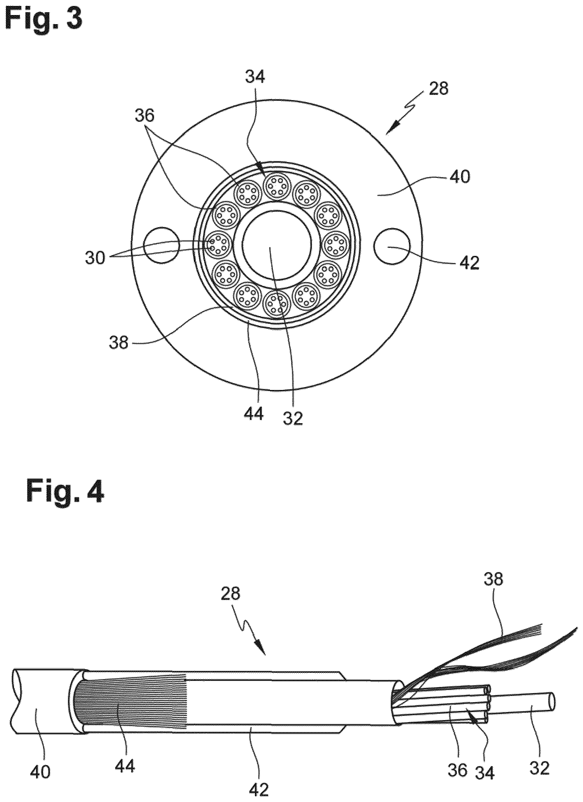

Le câble optique 28 de l'installation de câble optique est à raccorder à l'intérieur du boîtier de raccordement optique 20. Un exemple d'un tel câble optique est visible en figures 3 et 4.

Le câble optique 28 comprend un porteur central de renforcement mécanique 32 et une pluralité de module de fibres optiques 34 disposés autour du porteur central de renforcement mécanique 32. Le porteur central de renforcement mécanique 32 sera appelé ci-dessous « porteur central 32 » à fins de clarté de l'exposer.

Le porteur central 32 a pour fonction de supporter une partie des efforts mécaniques auxquels le câble optique 28 est soumis, notamment les efforts de flexion et les efforts longitudinaux. Le porteur central 32 peut être réalisé en plastique renforcé de fibres (appelé « FRP » ou « Fibre Reinforced Plastic » en anglais), en plastique à renfort de verre (appelé « GRP » ou « Glass Reinforced Plastic » en anglais) ou en plastique à renfort d'aramide (appelé « ARP » ou « Aramid Reinforced Plastic » en anglais).. Le porteur central 32 peut être de toute forme. De manière avantageuse, le porteur central 32 est de section circulaire de manière à avoir un agencement équilibré des modules de fibres optiques 34 autour de lui et une résistance aux efforts uniforme. De manière alternative, plusieurs porteurs centraux de renforcement mécanique 32 peuvent être disposés à l'intérieur des modules de fibres optiques 34.

Chaque module de fibres optiques 34 comprend un micro-tube 36 et une pluralité de fibres optiques 30 s'étendant à l'intérieur du micro-tube 36. Le micro-tube 36 est de préférence réalisé sous forme de tube souple ou « micro-bundle ».

Pour obtenir cette souplesse, le micro-tube présente un allongement à la rupture inférieur ou égal à 300%, de préférence inférieur à 200%, de manière encore préférée entre 80% et 200%. De plus, le micro-tube 36 présente de préférence une charge à la rupture inférieure ou égale à 20MPa, de préférence inférieure ou égale à 15MPa. Un tel micro-tube 36 peut ainsi être déchiré manuellement. Le micro-tube 36 présente de préférence une épaisseur inférieure ou égale à 0,2mm. Le micro-tube 36 est réalisé dans un matériau comprenant des halogènes ou un matériau à faible taux d'halogène (communément appelé zéro halogène). Le matériau du micro-tube 36 peut également être à faible émission de fumées et /ou non-propagateur de flamme.

Le micro-tube 36 sous forme de « micro-bundle » est à opposer aux tubes rigides (appelés « loose tubes » en anglais) et qui forment une coque rigide autour des fibres optiques.

Les modules de fibres optiques 34 sont de préférence enroulés autour du porteur central 32 selon un pas d'enroulement prédéterminé. Une pluralité de fils de maintien 38 sont guipés autour des modules de fibres optiques 34 pour les maintenir contre le porteur central 32. De manière générale, au moins un fil de maintien 38 peut être utilisé. On entend par « guipage » le fait d'entrelacer ou d'enrouler en hélice des brins de fil autour d'une âme, ici la pluralité de module de fibres optiques 34, afin de la contraindre contre le porteur central 32. Cette contrainte peut être maitrisée en fonction de l'effort de guipage appliqué par les fils de maintien 38.

Les fils de maintien 38 sont guipés autour des modules de fibres optiques 34 avec un effort de guipage prédéterminé. Cet effort de guipage est de préférence inférieur ou égal à 3 N. Il en effet important de ne pas guiper les fils de maintien autour des micro-tubes 36 avec un effort trop important, par exemple similaire à celui utilisé pour les tubes rigides ou « loose tubes », pour éviter tout risque de détérioration des fibres optiques. A titre de comparaison, les tubes rigides ou « loose tubes » sont généralement guipés autour du porteur central avec un effort de guipage supérieur ou égal à 5 N.

Les fils de maintien 38 peuvent être réalisé en aramide, polyester, verre, ou tout autre matériau adapté au guipage.

Le câble optique 28 comprend également une gaine de protection 40 formant une couche autour des micro-tubes 36 et des fils de maintien 38. La gaine de protection 40 peut être renforcée par un ou plusieurs porteurs périphériques 42.

Le câble optique 28 comprend également une couche de fibres 44, par exemple en aramide, entre les fils de maintien 38 et la gaine de protection 40.

Dans cette installation de câble optique, le porteur central 32 est fixé au boîtier de raccordement optique 22 de manière à limiter un déplacement longitudinal des modules de fibres optiques 34 par rapport à la gaine de protection 40. Comme indiqué ci-avant, les variations de températures ou les contraintes (vent, givre) subies par le câble optique 28 peuvent entrainer un phénomène de pistonnage entre les modules de fibres optiques 34 et la gaine de protection 40 risquant d'altérer le signal transmis par les fibres optiques 30 ou d'endommager ces mêmes fibres optiques 30.

Le guipage des fils de maintien 38 autour des modules de fibres optiques 34 permet limiter les déplacements entre les modules de fibres optiques 34 et le porteur central 32. Ainsi, la fixation du porteur central 32 au boîtier de raccordement optique 20 concourt à former un point d'appui pour l'ensemble du noyau du câble optique 28, i.e. le porteur central, les modules de fibres optiques 34 et les fils de maintien 38. Le phénomène de pistonnage est ainsi grandement limité grâce à ce montage du câble optique 28.

Cette solution de limitation du pistonnage est particulièrement adaptée aux câbles optiques 28 comprenant des micro-tubes 36 souples qui ne peuvent être guipés autour du porteur central 32 qu'avec un faible effort. Il est ainsi possible de bénéficier des avantages des micro-tubes 36 souples ou « micro-bundles » tout en limitant le phénomène de pistonnage.

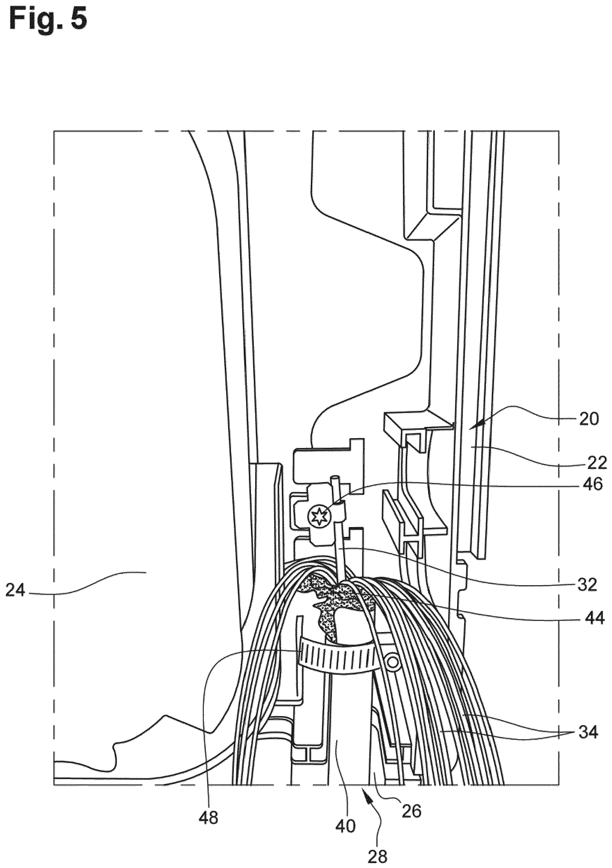

En référence à la figure 5, un exemple de fixation du porteur central 32 au boîtier de raccordement optique 20 est illustré.

Le câble optique 28 est inséré au travers d'une ouverture 26 formée dans le caisson 22. Le câble optique 28 est dénudé sur une partie de sa longueur de manière à faire apparaître les modules de fibres optiques 34. En particulier, la gaine de protection 40, les porteurs périphériques 42, les fibres 44 et les fils de maintien 38 sont retirés sur cette partie de longueur du câble optique 28. Ainsi, les modules de fibres optiques sont libres d'être manipulés par un opérateur.

Les modules de fibres optiques 34 sont écartés de manière à accéder au porteur central 32 qui est fixé à une paroi du caisson 22 grâce à un moyen de fixation 46. Ce moyen de fixation 46 peut un collier de serrage fixé lui-même au caisson 22, une plaquette mobile apte à comprimer le porteur central 32 ou tout autre moyen permettant d'empêcher le déplacement du porteur central 32, notamment longitudinal.

Le moyen de fixation 46 est de préférence disposé à proximité d'une ouverture 26 du boîtier de raccordement optique 20. Le boîtier de raccordement optique 20 peut comprendre une pluralité de moyen de fixation 46. Le boîtier de raccordement optique 20 peut notamment comprendre autant de moyens de fixation 46 que d'ouvertures 26.

Le moyen de fixation 46 est de préférence disposé face à une ouverture 26, de manière encore préférée aligné avec cette ouverture 26. Il est ainsi plus aisé de fixer le porteur central 32.

Le boîtier de raccordement optique 20 comprend en outre un moyen de serrage 48 de la gaine de protection 40. Le moyen de serrage 48 permet d'enserrer la totalité du câble optique 28, notamment la gaine de protection 40 avec les modules de fibres optiques 34 et le porteur central 32. Le moyen de serrage 48 forme un point d'appui du câble optique 28 au niveau du boîtier de raccordement optique 20. Le moyen de serrage 48 est disposé en amont du moyen de fixation 46 le long du câble optique 28, juste en amont de la portion dénudée de celui-ci.

L'invention propose en outre un procédé de raccordement d'un tel câble optique 28 au boîtier de raccordement optique 20. L'opérateur retire dans un premier temps une portion de la gaine de protection 40 et une portion dudit au moins un fil de maintien 38 de manière à dégager les modules de fibres optiques 34 et le porteur central 32.

Le porteur central 32 est ensuite fixé au boîtier de raccordement optique 20 pour limiter un déplacement longitudinal des modules de fibres optiques 34 le long de la gaine de protection 40.

Les fibres optiques 30 contenues dans les modules de fibres optiques 34 sont ensuite engagées dans une cassette de support d'épissures de manière à pouvoir les connecter à d'autres fibres optiques.

## Revendications

1. Installation de câble optique comprenant au moins un boîtier de raccordement optique (20) et au moins un câble optique (28) raccordé audit au moins un boîtier de raccordement optique, ledit au moins câble optique (28) comprenant :
- un porteur central de renforcement mécanique (32),
- au moins un module de fibres optiques (34) disposé autour du porteur central de renforcement mécanique (32), ledit au moins un module de fibres optiques (34) comprenant un micro-tube (36) et une pluralité de fibres optiques s'étendant à l'intérieur du micro-tube (36),
- au moins un fil de maintien (38) guipé autour dudit au moins un module de fibres optiques (34) pour maintenir ledit au moins un module de fibres optiques (34) contre le porteur central de renforcement mécanique (32), et
- une gaine de protection (40) disposée autour dudit au moins un fil de maintien (38),
dans lequel le porteur central de renforcement mécanique (32) est fixé audit au moins un boîtier de raccordement optique (20) pour limiter un déplacement longitudinal dudit au moins un module de fibres optiques (34) à l'intérieur le long de la gaine de protection (40).

2. Installation de câble optique selon la revendication 1, dans laquelle le micro-tube (36) dudit au moins un module de fibres optiques (34) présente une épaisseur inférieure ou égale à 0,2mm.

3. Installation de câble optique selon la revendication 1 ou 2, dans laquelle le micro-tube (36) dudit au moins un module de fibres optiques (34) présente un allongement à la rupture inférieur ou égal à 300%, de préférence inférieur à 200%, de manière encore préférée entre 80% et 200%.

4. Installation de câble optique selon la revendication 3, dans laquelle le micro-tube (36) dudit au moins un module de fibres optiques (34) présente une charge à la rupture inférieure ou égale à 20MPa, de préférence inférieure ou égale à 15MPa.

5. Installation de câble optique selon l'une quelconque des revendications précédentes, dans laquelle le micro-tube (36) dudit au moins un module de fibres optiques (34) est réalisé dans un matériau comprenant des halogènes ou un matériau à faible taux d'halogène, et/ou dans un matériau à faible émission de fumées, et/ou un matériau non propagateur de flamme.

6. Installation de câble optique selon l'une quelconque des revendications précédentes, dans laquelle ledit au moins un câble optique (28) comprend une pluralité de modules de fibres optiques (34) enroulés autour du porteur central de renforcement mécanique (32) selon un pas d'enroulement prédéterminé, ledit au moins un fil de maintien (38) étant guipé autour de la pluralité de modules de fibres optiques (34) pour maintenir ladite pluralité de modules de fibres optiques (34) contre le porteur central de renforcement mécanique (32).

7. Installation de câble optique selon l'une quelconque des revendications précédentes, dans laquelle ledit au moins un fil de maintien (38) est guipé autour dudit au moins un module de fibres optiques (34) avec un effort de guipage inférieur ou égal à 3 N.

8. Installation de câble optique selon l'une quelconque des revendications précédentes, dans laquelle ledit au moins un boîtier de raccordement optique (20) forme un logement de réception dudit au moins un câble optique (28) et comprend un moyen de fixation du porteur central de renforcement mécanique (32) au niveau dudit logement de réception.

9. Installation de câble optique selon l'une quelconque des revendications précédentes, dans laquelle ledit au moins un boîtier de raccordement optique (20) est un boîtier de protection d'épissures comprenant au moins une cassette de support d'épissures (24) configurée pour recevoir une épissure d'au moins une fibre optique (30) dudit au moins un module de fibres optiques (34).

10. Procédé de raccordement d'un câble optique (28) à un boîtier de raccordement optique (20), comprenant les étapes suivantes :
- fournir une installation de câble optique selon l'une quelconque des revendications précédentes,
- retirer une portion de la gaine de protection (40) et une portion dudit au moins un fil de maintien (38) de manière à dégager ledit au moins un module de fibres optiques (34) et le porteur central de renforcement mécanique (32),
- fixer le porteur central de renforcement mécanique (32) au boîtier de raccordement optique (20) pour limiter un déplacement longitudinal dudit au moins un module de fibres optiques (34) le long de la gaine de protection (40),
- engager au moins une fibre optique (30) dudit au moins un module de fibres optiques (34) dans le boîtier de raccordement optique (20) de manière à pouvoir la connecter à une autre fibre optique (30).
